# EUROPEAN PATENT SPECIFICATION

(11) **EP 1 939 037 B1**
(45) Date of publication and mention of the grant of the patent: **15.02.2012**
(21) Application number: 06127303.3
(22) Date of filing: 28.12.2006
(51) Int. Cl.: B60P 7/08

(54) **Fastener for straps**
Spannratsche für Spannbänder
Tendeur de sangles

(43) Date of publication of application: 02.07.2008
(73) Proprietor: Huang, Han-Ching, Taiwan, Province of China (TW)
(72) Inventor: Huang, Han-Ching, Taiwan, Province of China (TW)
(74) Representative: Lang, Christian

(56) References cited:
- WO-A-97/39915
- DE-A1- 19 830 567
- US-B1- 6 641 116

## Description

### BACKGROUND OF INVENTION

### 1. FIELD OF INVENTION

The present invention relates to a fastener for straps as known, e.g., from WO 97/39915 A1. Such a known fastener for straps comprises the technical features as described in the preamble of the independent claim.

### 2. RELATED PRIOR ART

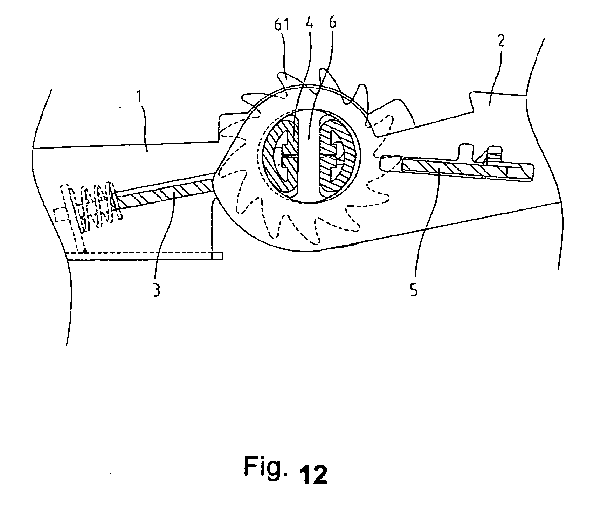

Taiwanese Patent Publication No.225765 discloses a conventional fastener. The fastener includes a reel 4, a first handle 1 connected to the reel 4, a second handle 2 connected to the reel 4, two ratchet wheels 6 connected to the reel 4, a first spring-loaded detent 3 located on the first handle 1 and a second spring-loaded detent 5 located on the second handle 2. A first strap B is connected to the first handle 1 while a second strap B is connected to the reel 4. The first handle 1 includes two walls each including a first arched edge, a second arched edge and a shoulder 12 between the first and second arched edges. The second handle 2 includes two cams. To fasten the straps B, the second handle 2 is pivoted from the first handle 1. The pivoting is limited by the second spring-loaded detent 5 against the shoulders 12 of the first handle1. To loosen the straps B, the second spring-loaded detent 5 is moved onto the second arched edges of the first handle 1 and therefore kept from the ratchet wheels 6 while the first spring-loaded detent 3 is disengaged from the ratchet wheels 6 by the cams of the second handle 2. However, it is difficult to reel in the second strap B. Referring to Fig. 12 of the drawings of the present application, the second arched edges of the first handle 1 are pushed by the second spring-loaded detent 5 while the cams of the second handle 2 are pushed by the first spring-loaded detent 3 so that the reel 4 is "handcuffed" by the handles 1 and 2.

The present invention is therefore intended to obviate or at least alleviate the problems encountered in prior art.

### SUMMARY OF INVENTION

The present invention provides a fastener for straps having the additional technical features as described in the characterizing portions of the independent claim 1. Preferred embodiments are described in the dependent claims.

According to the present invention, a fastener includes a frame, a handle and a reel inserted through the frame and the handle so that a strap can be reeled when the reel is rotated, Two protective units are formed on the frame or the handle for protecting the reel from the handle or the frame. Two ratchet wheels are connected to the reel. A first detent is movable on the frame for engagement with the ratchet wheels. A second detent is movable on the handle for engagement with the ratchet wheels.

The primary advantage of the fastener according to the present invention is free reeling of the strap since the protective units keep the reel away from the handle or the frame.

Other advantages and features of the present invention will be apparent from the following exemplary description referring to the drawings.

### BRIEF DESCRIPTION OF DRAWINGS

The present invention will be described via detailed illustration of three embodiments referring to the drawings.
Fig. 1 is a perspective view of a fastener according to the first embodiment of the present invention.
Fig. 2 is an exploded view of the fastener shown in Fig.1.
Fig. 3 is a cross-sectional view of the fastener taken along a line 3-3 shown in Fig. 1.
Fig. 4 is a cross-sectional view of the fastener taken along a line 4-4 shown in Fig. 3.
Fig. 5 is a cross-sectional view of the fastener in another position than shown in Fig. 4.
Fig. 6 is an enlarged view of the fastener shown in Fig. 5.
Fig. 7 is an exploded view of a fastener according to the second embodiment of the present invention.
Fig. 8 is a cross-sectional view of the fastener shown in Fig. 7.
Fig. 9 is a perspective view of a fastener according to the third embodiment of the present invention.
Fig. 10 is an exploded view of the fastener shown in Fig. 9.
Fig. 11 is a cross-sectional view of the fastener shown in Fig. 9.
Fig. 12 is a side view of a conventional fastener.

### DETAILED DESCRIPTION OF PREFERRED EMBODIMENT

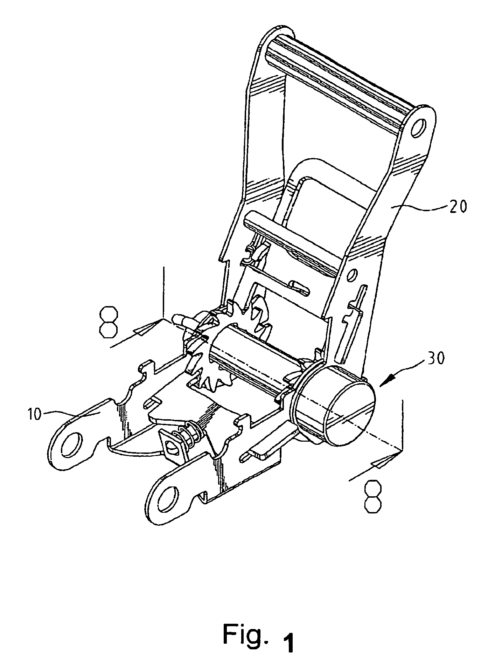

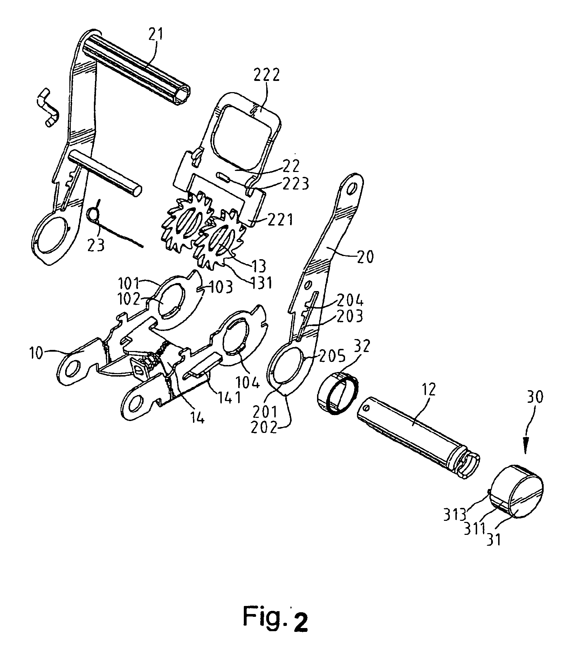

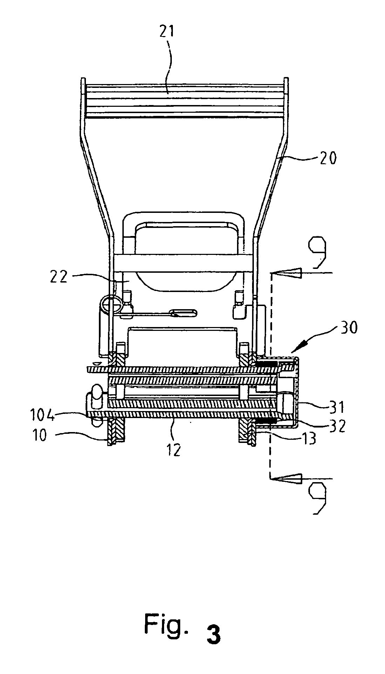

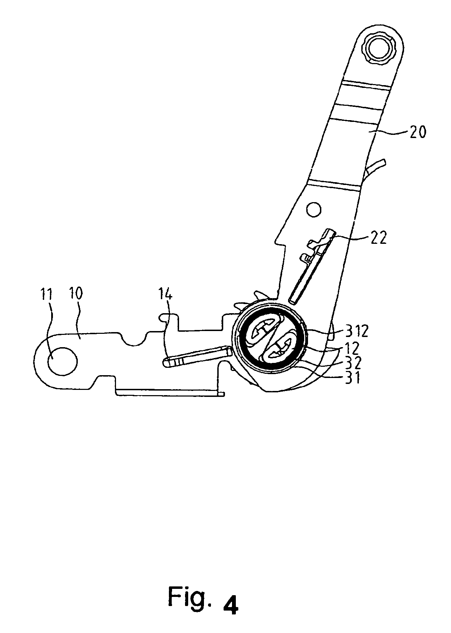

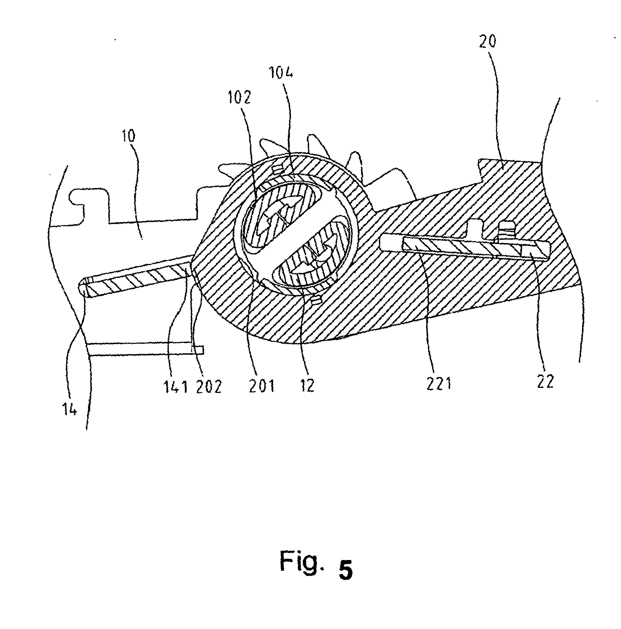

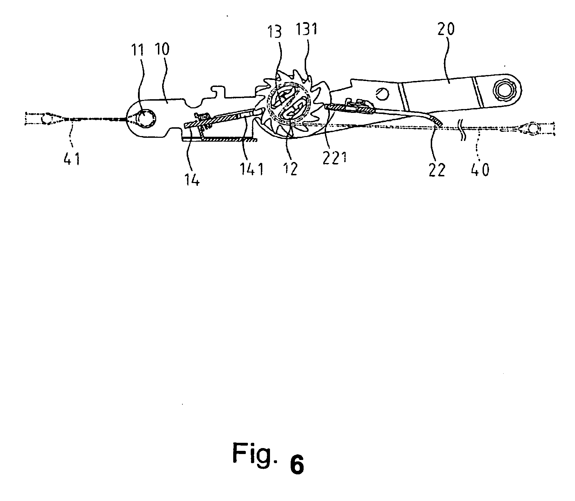

Referring to the Figs. 1 through 6, there is shown a fastener according to a first embodiment of the present invention.

The fastener includes a frame 10, a reel 12, two ratchet wheels 13, a handle 20, a first detent 14 and a second detent 22.

The frame 10 includes two walls on a floor. Each of the walls of the frame 10 includes an aperture 102 in an end, two arched ridges 104 around the aperture 102, a first arched edge 101 at the end, a second arched edge 106, a cutout 103 in the second arched edge 106, a shoulder 108 between the arched edges 101 and 106 and a slot 109 therein.

The handle 20 includes two walls and a grip 21 between the walls. Each of the walls of the handle 20 includes cam 202 at an end, a slot 203 therein and a boss 204 thereon within the slot 203. An aperture 201 is defined in each of the cams 202.

The reel 12 is rotationally inserted in the apertures 201 of the handle 20 and the apertures 102 of the frame 10. The arched ridges 104 are inserted in the apertures 201.

Each of the ratchet wheels 13 includes ratchets 131. The ratchet wheels 13 are non-rotationally connected to the reel 12.

The first detent 14 includes two fins 141 inserted through the slots 109 of the walls of the frame 10 for engagement with the ratchets 131 of the ratchet wheels 13. A spring is compressed between the first detent 14 and a tab raised
from the floor of the frame 10 for keeping the fins 141 engaged with the ratchets 131.

The second detent 22 includes two fins 221 inserted through the slots 203 of the walls of the handle 20 for engagement with the ratchets 131 of the ratchet wheels 13. The second detent 22 includes a grip 222 thereon and an aperture 223 therein.

An elastic element 23 is provided between the second detent 22 and a portion of the handle 20 for keeping the fins 221 engaged with the ratchets 131. The elastic element 23 is a torque spring with a helical portion, a first end extending from the helical portion and a second end extending from the helical portion. The helical portion of the spring 23 in mounted on the boss 204 of one of the walls of the handle 20. The first end of the spring 23 is located against the wall of the handle 20. The second end of the spring 23 is inserted through the aperture 223 of the second detent 22.

A first strap 41 is connected to a crossbar 11 provided between the walls of the frame 10 while a second strap 40 is connected to the reel 12.

To fasten the straps 40 and 41, the handle 20 is pivoted from the frame 10. The ratchet wheels 13 are rotated by the second detent 22 connected to the handle 20. The rotation of the ratchet 13 is allowed by the first detent 14 movable on the frame 10. The second strap 40 is wound onto the reel 12 connected to the ratchet wheels 13. When the handle 20 is pivoted towards the frame 10, the second detent 22 rattles on the ratchet wheels 13 while the first detent 14 keeps the ratchet wheels 13 in position. The handle 20 is pivoted to and fro with respect to the frame 10 so that the straps 40 and 41 are fastened. To loosen the straps 40 and 41, a user pulls the second detent 22 from the
ratchet wheels 13 by the grip 222. The user pivots the handle 20 from the frame 10. The fins 221 are moved, past the shoulders 108, onto the second arched edges 106 from the first arched edges 101 so that the second arched edges 106 disengage the fins 221 from the ratchets 131 and that the cams 202 disengage the fins 141 from the ratchets 131. Thus, the second strap 40 can be reeled out.

The reel 12 is protected from the handle 20 by the arched ridges 104 inserted in the apertures 201. That is, the reel 12 is not clamped by the handle 20 and the frame 10 and therefore can easily be rotated.

An automatic reeling device 30 is further provided, which includes a cover 31 attached to one of the walls of the handle 20 and a coil spring 32 formed with an end connected to the wall of the handle 20 and another end connected to the cover 31.

The cover 31 covers the coil spring 32. The cover 31 includes a wall 311 and a plurality of hooks 313 extending from the wall 311. Each of the hooks 313 is inserted through an aperture 205 defined in the wall of the handle 20.

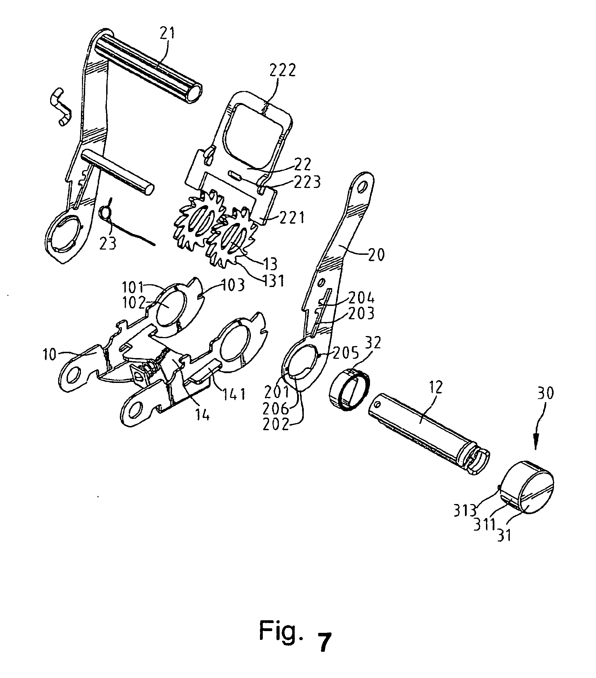

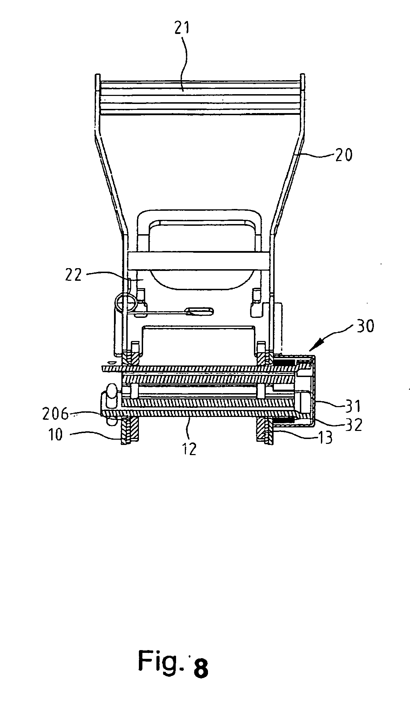

Referring to Fig. 7 and 8, there is shown a fastener according to a second embodiment of the present invention. The second embodiment is like the first embodiment except two things. Firstly, the arched ridges 104 are omitted. Secondly, arched ridges 206 are formed around the aperture 201 in each of
the cams 202. The arched ridges 206 keep the reel 12 from the frame 10 so that the reel 12 can freely be rotated.

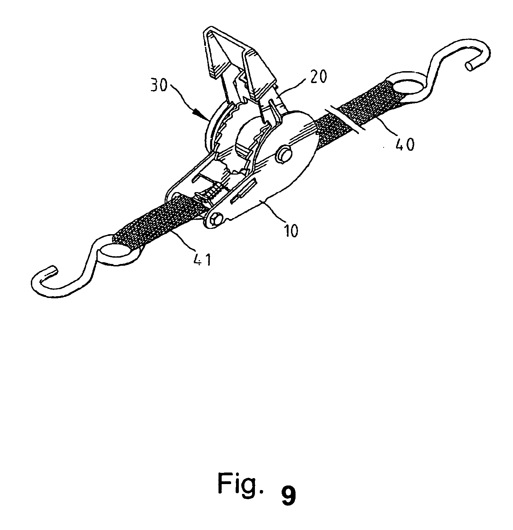

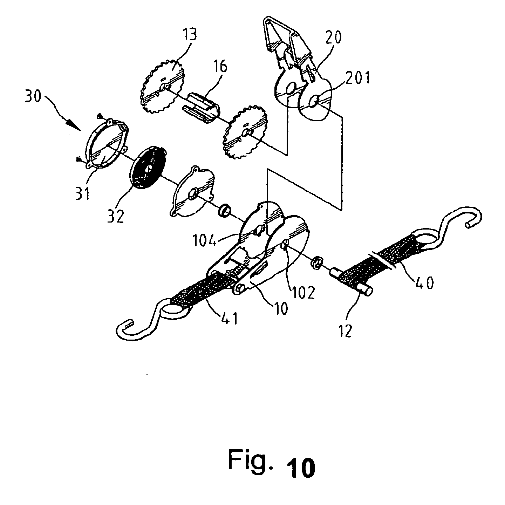

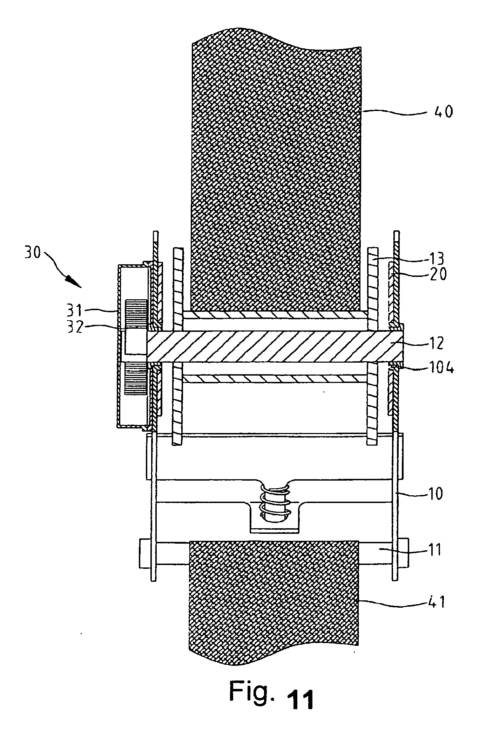

Referring to Fig. 9 through 11, there is shown a fastener according to a third embodiment of the present invention. The third embodiment is like the first embodiment except including a cylinder 16. The ratchet wheels 13 are connected to the cylinder 16 instead of the reel 12.

The fastener according to the present invention exhibits advantages. Firstly, the reeling out is easy since the arched ridges keep the reel 12 from the handle 20.

Secondly, the reeling out is easy since the arched ridges keep the reel 12 from the frame 10.

Thirdly, the reeling in after use is easy because of the automatic reeling device 30.

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A fastener comprising:
a frame (10);
a handle (20);
a reel (12) inserted through the frame (10) and the handle (20) so that a strap (40) can be reeled when the reel (12) is rotated;
two ratchet wheels (13) connected to the reel (12);
a first detent (14) movable on the frame (10) for engagement with the ratchet wheels (13);
a second detent (22) movable on the handle (20) for engagement with the ratchet wheels (13);
**characterized by**
comprising an automatic reeling device (30) provided between the handle (20) and the reel (12).

2. The fastener according to claim 1, wherein the automatic reeling device (30) comprises a coil spring (32) connected to the handle (20) at an end and connected to the reel (12) at another end.

3. The fastener according to claim 2, wherein the automatic reeling device (30) comprises a cover (31) attached to the handle (20) for covering the coil spring (32).

4. The fastener according to claim 3, wherein the cover (31) is formed with hooks (311), and the handle (20) defines apertures (205) for receiving the hooks (311).

5. The fastener according to claim 4, further comprising an elastic element (23) provided between the handle (20) and the second detent (22).

6. The fastener according to claim 5, wherein the elastic element (23) is a torque spring.

## Patentansprüche

1. Spannvorrichtung mit:
einem Rahmen (10);
einem Griff (20);
einer Spule (12), die so in den Rahmen (10) und den Griff (20) eingesetzt ist, dass ein Band (40) aufgewickelt werden kann, wenn die Spule (12) gedreht wird;
zwei mit der Spule (12) verbundenen Sperrädern (13);
einer ersten Rasteinheit (14), die auf dem Rahmen (10) bewegbar ist, um in die Sperrräder (13) einzugreifen;
einer zweiten Rasteinheit (22), die auf dem Griff (20) bewegbar ist, um in die Sperräder (13) einzugreifen;
**dadurch gekennzeichnet, dass**
die Spannvorrichtung eine automatische Wickelvorrichtung (30) umfasst, die zwischen dem Griff (20) und der Spule (12) zur Verfügung gestellt ist.

2. Spannvorrichtung gemäß Anspruch 1, wobei die automatische Wickelvorrichtung (30) eine Spiralfeder (32) umfasst, die an einem Ende mit dem Griff (20) verbunden ist und an einem anderen Ende mit der Spule (12) verbunden ist.

3. Spannvorrichtung gemäß Anspruch 2, wobei die automatische Wickelvorrichtung (30) eine Abdeckung (31) umfasst, die am Griff (20) angebracht ist, um die Spiralfeder (32) abzudecken.

4. Spannvorrichtung gemäß Anspruch 3, wobei die Abdeckung (31) mit Hacken (311) ausgebildet ist und der Griff (20) Öffnungen (205) festlegt, um die Haken (311) aufzunehmen.

5. Spannvorrichtung gemäß Anspruch 4, die ferner ein elastisches Element (23) umfasst, das zwischen dem Griff (20) und der zweiten Rasteinheit (22) zur Verfügung gestellt ist.

6. Spannvorrichtung gemäß Anspruch 5, wobei das elastische Element (23) eine Drehmomentfeder ist.

## Revendications

1. Attache comprenant :
un cadre (10) ;
une poignée (20) ;
une bobine (12) insérée à travers le cadre (10) et la poignée (20) si bien qu'une courroie (40) peut être enroulée lorsque la bobine (12) est en rotation ;
deux roues à cliquet (13) reliées à la bobine (12) ;
un premier cran d'arrêt (14) mobile sur le cadre (10) pour être en prise avec les roues à cliquet (13),
un second cran d'arrêt (22) mobile sur la poignée (20) pour être en prise avec les roues à cliquet (13),
**caractérisée par**
le fait de comprendre un dispositif d'enroulement automatique (30) prévu entre la poignée (20) et la bobine (12).

2. Attache selon la revendication 1 dans laquelle le dispositif d'enroulement automatique (30) comprend un ressort à boudin (32) relié à la poignée (20) à une extrémité et relié à la bobine (12) à une autre extrémité.

3. Attache selon la revendication 2 dans laquelle le dispositif d'enroulement automatique (30) comprend un recouvrement (31) fixé à la poignée (20) pour couvrir le ressort à boudin (32).

4. Attache selon la revendication 3 dans laquelle le recouvrement (31) est formé avec des crochets (311) et la poignée (20) définit des ouvertures (205) pour recevoir les crochets (311).

5. Attache selon la revendication 4 comprenant de plus un élément élastique (23) prévu entre la poignée (20) et le second cran d'arrêt (22).

6. Attache selon la revendication 5 dans laquelle l'élément élastique (23) est un ressort de torsion.
